# EUROPEAN PATENT APPLICATION

(11) **EP 1 100 209 A1**
(43) Date of publication of application: **16.05.2001**
(21) Application number: 99830708.6
(22) Date of filing: 12.11.1999
(51) Int. Cl.: H04B 1/38

(54) **Allotment of sim cards in a battery**

(71) Applicant: Soc. Excell S.r.l., 00152 Roma (IT)
(72) Inventor: d'Andrea, Fabio, 00153 Roma (IT)

(57) **Abstract**

The allotment of sim cards or sim card in the inside part of the battery obtained in the plastic structure is the innovation of the invention.

The outise structure of the battery has built with the proper allotments and/or allotment according to the battery's type..

The number of allotments changes according to the battery's type.

## Description

This invention concerns the allotment of sim cards for cellular mobile phones.

Let's take as example picture d of the technical drawing representing standard sim card, excepted eventual changes and/or modifications, this object will be placed in the predisposed cavity in the battery of the cellular mobile phones. It will have a rectangular more extended shape to allow it an easy extraction and/or introduction.

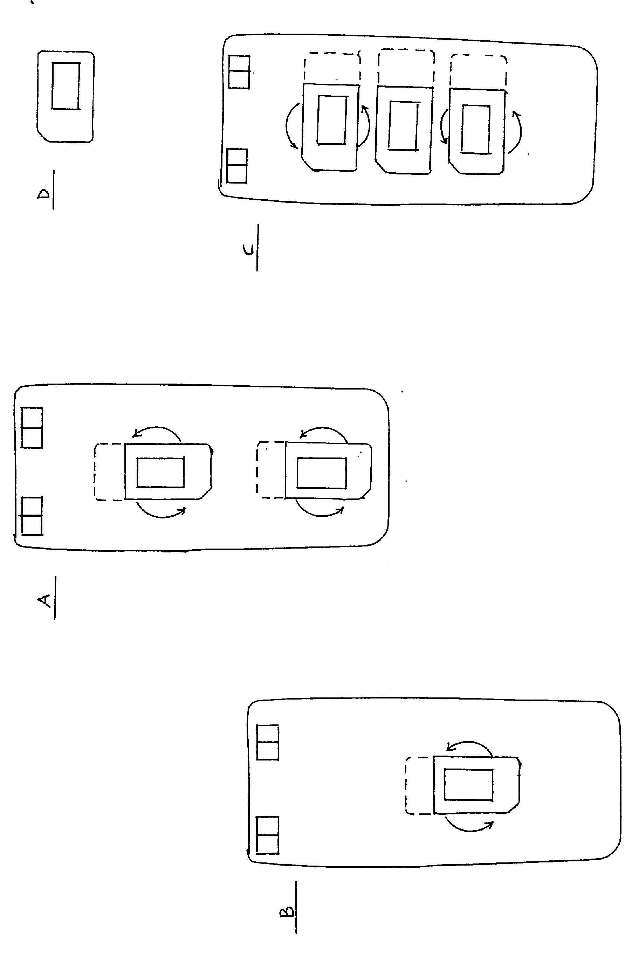

The pictures a, b, c of the drawing show the possibilities of construction of these allotments. It's necessary to show that these allotments will not damage battery's circuits because the same battery in the outside plastic part will be drawn and built with the proper drawn allotments.

Standard sim cards or sim card will be inserted and kept in the allotment without possibility of loss.

When its use is necessary, it will be extracted and introduced to be used.

## Claims

1. This invention has industrial characteristic and it has for object the allotment of sim cards for cellular mobile phones, called space concerning the innovation of the invention.
It obtains from the plastic covering of the same battery of the cellular mobile phones in the part that interpenetrates with the battery's part that it links up at the cellular mobile phones. so it is possible to obtain one or more allotments in the rectangular shape according to the dimensions of the same battery without that it can damage by no means the functionality of the apparatus.
Infact, with this invention there is the possibility to change manually the sim card in any moment.
As it is clear in the technical drawing, the standard sim card indicated in the picture d will be inserted in the proper allotments obtained in the inside part of the battery. It will be placed with the back contacts of the cellular mobile phones, with more positions as indicated in the picture a, b, c of the enclosured drawing.
